# EUROPEAN PATENT SPECIFICATION

(11) **EP 2 686 356 B1**
(45) Date of publication and mention of the grant of the patent: **15.06.2016**
(21) Application number: 12710624.3
(22) Date of filing: 13.03.2012
(51) Int. Cl.: C08F 220/06, C08F 8/32, C09D 11/00

(54) **POLYMER AND COMPOSITIONS THEREOF**
POLYMER UND ZUSAMMENSETZUNGEN DARAUS
POLYMÈRE ET COMPOSITIONS DE CELUI-CI

(30) Priority: 14.03.2011 US 201161452335 P
(43) Date of publication of application: 22.01.2014
(73) Proprietor: Lubrizol Advanced Materials, Inc., Cleveland, OH 44141-3247 (US)
(72) Inventor: SHOOTER, Andrew J., Blackley Greater Manchester M9 8ZS (GB); RICHARDS, Stuart N., Blackley Greater Manchester M9 8ZS (GB)
(74) Representative: Bradley, Josephine Mary
(86) International application number: PCT/US2012/028875
(87) International publication number: WO 2012/125609

(56) References cited:
- EP-A1- 0 722 994
- EP-A2- 0 826 751
- US-A1- 2003 050 404
- US-A1- 2008 021 169

## Description

### FIELD OF INVENTION

The invention relates to a composition containing a polymer obtained by polymerising (1) a mono-vinyl monomer with one or more carboxylic acid groups to form a polymer with at least 2 to 200, or 5 to 150, or 10 to 100, or 15 to 50 repeat units, and (2) reacting the polymer of (1) with a primary hydrocarbyl amine and polyoxyalkylene primary amine (typically polyetheramine). The invention further relates to a composition containing a particulate solid, a liquid medium, and the polymer. The invention further relates to the use of the polymer as a dispersant.

### BACKGROUND OF THE INVENTION

Paints, inks and coatings are well established as a means of providing a protective coating layer to materials such as metals, alloys, composites, plastics, concrete, ceramic, wood, paper, and textile glass. Paints and inks use particulate solids such as pigments and fillers to provide colour. The paints and inks may be organic or aqueous-based. A variety of disclosures have discussed dispersants for paints and inks, in particular water-based or aqueous systems. These are summarised below.

US Patent 5,589,522 discloses a pigment dispersant based on a hydrophilic polyacrylic acid backbone of weight average molecular weight between 1000 and 5000; and hydrophobic segment side chains, in an amount of one to ten side chains attached to one backbone chain.

US Patent 6,599,973 describes a graft copolymer of molecular weight 5,000-100,000 with a hydrophobic back bone, anionic side chains and nonionic side chains. US Patent 5,213,131 discloses a pigment dispersant based on copolymerising hydrophilic macromonomers of molecular weight 1000 and 30,000 with hydrophobic monomers where in the acid groups are neutralized with an inorganic base or amine.

US Patent 5,633,298 describes a cement additive synthesised from polyacrylic acid, Jeffamine and a heterocyclic amine for example morpholine.

US Patent 5,753,744 discloses copolymers of maleic anhydride and methyl vinyl ether post reacted with surfonamines.

US Patent 5,725,657 discloses acrylic polymers imidized with Surfonamines and amine salts.

US Patent 5,703,174 discloses acrylic polymers with air detraining functional side chains of polyoxyalkylene ethers.

US Patent 5,840,114 discloses acrylic polymers with oxyalkylene pendant groups (amide and imide groups).

US Patents 5,393,343 and 5,583,183 disclose an imidized acrylic polymer.

US Patent Application 2002/0065358 discloses a method for inhibiting scale formation using water soluble polymers having pendant derivatized amides.

US Patent Application 2008/0227894 discloses pigment dispersants based on acrylic polymers that contain at least one pending chromophore covalently bound to a polymeric backbone.

International Patent Application WO96/29676 discloses polyacrylic acid reacted with Sufonamine® amines.
EP0826751A2 discloses a graft copolymer dispersant for an ink, having a backbone portion and at least one sidechain portion wherein both portions are prepared from ethylenically unsaturated monomers and either the backbone or sidechain portion is hydrophilic and the other portion is hydrophobic, the hydrophobic portion containing at least 50% by weight, based on the total weight of the hydrophobic portion, of a monomer selected from the group consisting of aryl esters of acrylic acid, aryl esters of methacrylic acid, N-aryl acrylamide, N-aryl methacrylamide and vinyl aryl esters.

US 2003/0050404 discloses a process for modifying polymers containing acid groups by reaction of
(a) polymers comprising at least 5% by weight of a copolymerized monoethylenically unsaturated monomer containing acid groups and having molar masses of from 200 to 100,000, with
(b) polyalkylene glycols which are endcapped at one end, alkylpolyalkylene glycol amines or mixtures thereof, or mixtures of at least one of the two compounds specified with up to 30% by weight, based on the mixtures, of ammonia, amines, alcohols, hydroxycarboxylic acids or aminocarboxylic acids at up to 250° C.

US 2008/0021169 Al discloses a process for preparing a polymer P having amide and ester groups, characterized in that, in a first step, a homo- or copolymer PI of (meth)acrylic acid is reacted with a monohydroxylic compound E at a temperature of up to 200° C. so as to form anhydride groups in addition to ester groups, and, in a second step, the anhydride groups formed in the first step are reacted with a monoamine compound A at temperatures significantly below 100° C. to give the amide.

EP0722994 discloses aqueous ink compositions based on graft copolymers as pigment dispersants. Said graft copolymers comprise an acrylic acid residue and alkyl-acrylamide residues wherein the alkyl may be a straight long chain alkyl or a polyalkylene oxide. Said copolymers being obtained by the reaction of an amine onto a polyacrylic acid polymer.

### SUMMARY OF THE INVENTION

The inventors of the present invention have discovered that the compositions disclosed herein are capable of at least one of enhanced mill base viscosity (e.g., lower viscosity), and enhanced (colloidal) stability of aqueous dispersions, improved pigment dispersion, lower ink viscosity, increased pigment loading, and a lower degree of shear thinning after aging. In some embodiments, the polymers and compositions disclosed herein reduce clogging (or often referred to as plugging) of an inkjet printer.

In one embodiment, the invention polymer may be obtained/obtainable by a process comprising:
(a) polymerising (e.g., free radically) a mono-vinyl monomer with one or more carboxylic acid groups, or salts thereof to form a polymer with at least 2 to 200, or 5 to 150, or 10 to 100, or 15 to 50 repeat units, and
   either (b) or (c), or both (b) and (c).
(b) reacting the (e.g., carboxylic acid group(s)) of the) polymer of (1) with a primary hydrocarbyl amine and polyoxyalkylene primary amine (typically polyetheramine) forming an amide or imide linkage on said polymer, or
(c) reacting the (e.g., carboxylic acid group(s) of the) polymer of (1) with a polyoxyalkylene alcohol forming an ester linkage(s).

The mono-vinyl monomer may include acrylic acid, methacrylic acid, itaconic acid, crotonic acid, maleic acid, tiglic acid, mesaconic acid, citraconic acid, or mixtures thereof. The mono-vinyl monomer may include acrylic acid, methacrylic acid, itaconic acid, or mixtures thereof. In one embodiment, the mono-vinyl monomer includes acrylic acid.

If the mono-vinyl monomer with one or more carboxylic acid groups may be in the form of salt, the salt may be an ammonium salt, an amine salt, an alkali metal salt, or an alkaline earth metal salt. The alkali metal salt may be a sodium, a lithium, or a potassium salt (typically a sodium salt). The alkaline earth metal salt may include a magnesium or a calcium salt.

The product of (1) may have a number average molecular weight of up to 20,000, or 500 to 10,000, or 750 to 5000, or 1000 to 3000. In one embodiment, the product of (1) may have a number average molecular weight of 1000 to 3000.

The polymer of the invention may have a number average molecular weight of 3000 to 70,000, or 3000, to 20,000, or 5000 to 12,000.

In one embodiment, the invention polymer may be obtained/obtainable by a process comprising:
(a) polymerising a (meth)acrylic acid (typically acrylic acid), or salts thereof to form a polymer with at least 2 to 200, or 5 to 150, or 10 to 100, or 15 to 50 repeat units, and
(b) reacting the polymer of (1) with a primary hydrocarbyl amine and polyoxyalkylene primary amine (typically polyetheramine).

The polymer of the invention may also be obtained/obtainable by a process comprising:
(i) reacting a mono-vinyl monomer containing one or more carboxylic acid groups, or salts thereof, with a primary hydrocarbyl amine and a polyoxyalkylene primary amine either individually or optionally mixed together; and
(ii) polymerising the product of (i) to form a polymer with at least 2 to 200, or 5 to 150, or 10 to 100, or 15 to 50 repeat units.

The invention provides for a polymer comprising at least 2 to 200, or 5 to 150, or 10 to 100, or 15 to 50 repeat units, wherein the repeat units are selected from the group of structures (a), (b), (c), and (d) comprising:
(a) a repeat unit represented by: 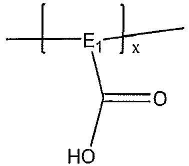
(b) a repeat unit represented by: 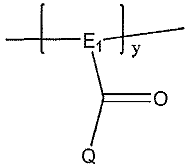
(c) a repeat unit represented by: 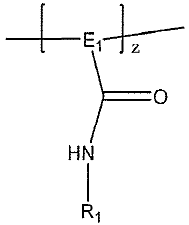 and
(d) a repeat unit represented by: 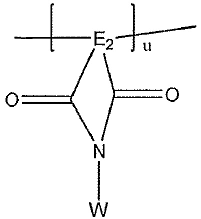 wherein
   E₁ is a repeat unit derived from a mono-vinyl monomer with one or more carboxylic acid groups separated by 2 to 5, or 2 to 3 carbon atoms;
   E₂ is a repeat unit derived from one or two mono-vinyl monomer repeat units having one or more carboxylic acid groups, wherein the carboxylic acid groups are separated by 2 to 5, or 2 to 3 carbon atoms;
   u is greater than 0;
   x is 0 to 50, or 0 to 40, or 3 to 30, or 5 to 25;
   y is 1 to 50, or 2 to 35, or 2 to 20, or 2 to 15, or 3 to 15;
   z is 1 to 100, or 3 to 75, or 5 to 50, or 7 to 30;
   Q is either 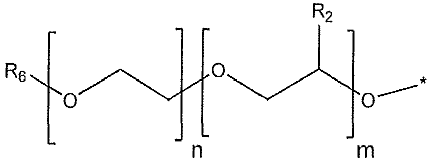
   or 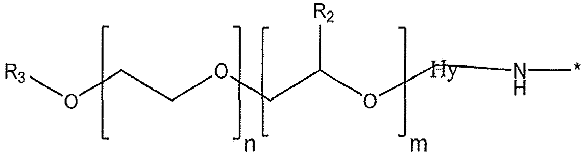
   Hy is a linear or branched hydrocarbylene group containing 1 to 10, or 1 to 5, or 1 to 3, or 2 to 3 carbon atoms;
   each R₁ is a hydrocarbyl group, typically a C₁₋₁₀₀, C₁₋₃₀, or C₆₋₂₄, or C₇₋₁₈ hydrocarbyl group;
   each R₂ is -CH₃, -CH₂CH₃, or an aromatic group, or a substituted aromatic group;
   each R₃ is a hydrocarbyl group, typically a C₁₋₃₀, or C₆₋₂₄, or C₈₋₁₈ hydrocarbyl group;
   each R₆ is R₃ or an optionally substituted (meth)acrylic group;
   W is either R₁- or 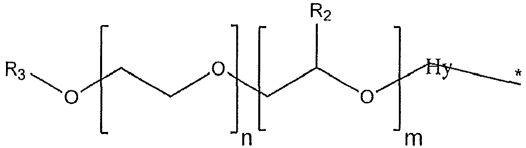
   and the sum of n + m is 5 to 80, or 7 to 77, or 8 to 75, or 10 to 70, typically n is an integer that is larger than m.

Thus the invention provides for a polymer comprising at least 2 to 200, or 5 to 150, or 10 to 100, or 15 to 50 repeat units, wherein the repeat units may have structures (a), (b), (c) and (d) comprising:
(a) a repeat unit represented by: 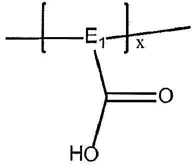
(b) a repeat unit represented by: 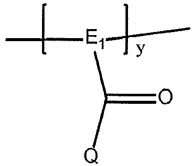
(c) a repeat unit represented by: 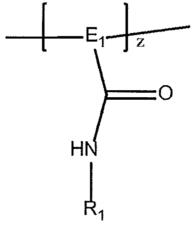 and
(d) a repeat unit represented by: 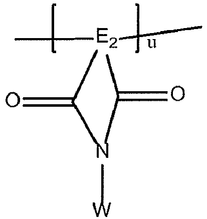 wherein
   E₁ and its pendant carboxylic and/or carbonyl group may be a repeat unit derived from polymerization of a mono-vinyl monomer (also defined as a monoethylenically unsaturated monomer) with one or more carboxylic acid groups separated by 2 to 5, or 2 to 3 carbon atoms (typically, the carbon atoms are bonded to form an alkylene chain);
   E₂ and its two pendant carbonyl groups may be a repeat unit derived from polymerizing one or two mono-vinyl monomer repeat units having one or more carboxylic acid groups, wherein the carboxylic acid groups are separated by 2 to 5, or 2 to 3 carbon atoms (typically, the carbon atoms are bonded to form an alkylene chain);u is greater than 0 and may be up to 150, or 110, or 70, or 45;
   x may be 0 to 50, or 0 to 40, or 3 to 30, or 5 to 25;
   y may be 1 to 50, or 2 to 35, or 2 to 20, or 2 to 15, or 3 to 15;
   z may be 1 to 100, or 3 to 75, or 5 to 50, or 7 to 30;
   Q may be either 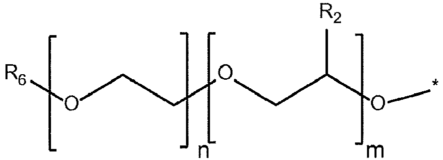
   or 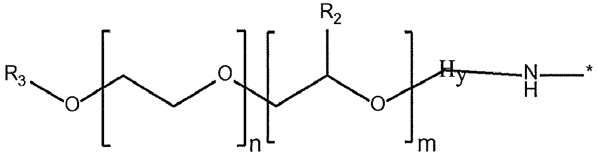
   Hy may be a linear or branched hydrocarbylene group containing 1 to 10, or 1 to 5, or 1 to 3, or 2 to 3 carbon atoms;
   each R₁ may be a hydrocarbyl group, typically a C₁₋₁₀₀, C₁₋₃₀, or C₆₋₂₄, or C₇₋₁₈ hydrocarbyl group (typically an alkyl or alkaryl, or aryl group);
   each R₂ may be -CH₃, -CH₂CH₃, or an aromatic group (typically a phenyl group, a naphthyl group), or a substituted aromatic group;
   each R₃ may be a hydrocarbyl group, typically a C₁₋₃₀, or C₆₋₂₄, or C₈₋₁₈ hydrocarbyl group (typically an alkyl or alkaryl, or aryl group);
   each R₆ may be R₃ or an optionally substituted (meth)acrylic group (typically each R₆ may be R₃ or a hydroxyalkyl (meth)acrylate);
   W may be either R₁-or 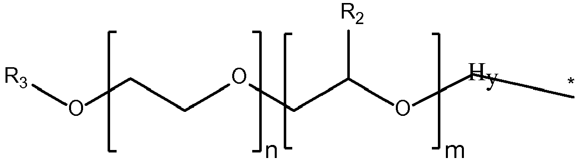
   and
   the sum of n + m may be 5 to 80, or 7 to 77, or 8 to 75, or 10 to 70, typically n may be an integer that may be larger than m (n may be 11 to 70, and m may be 0 to 34). The polymer may be random or blocky if a copolymer.

If repeat unit (d) is present, the imide may be derived from one repeat unit when the carboxylic acid is derived from maleic anhydride or citraconic acid. If repeat unit (d) is present, the imide may be derived from two repeat units when the carboxylic acid is derived from a monocarboxylic acid.

In one embodiment, Q may be either: 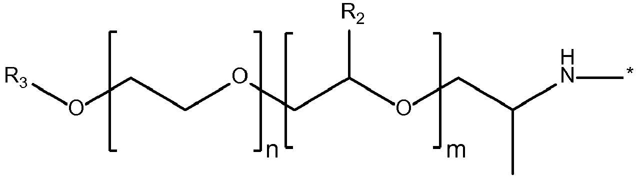 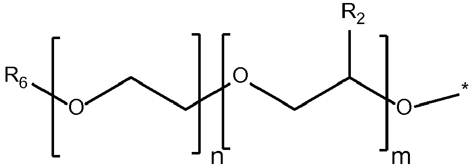 wherein R₃, R₂, n and m are defined above. The polymer may be random or blocky if a copolymer.

In different embodiments, the polymer may have:
x in the range of 0 to 50, y in the range of 1 to 50, and z in the range of 1 to 100; or
x in the range of 0 to 40, y in the range of 2 to 35, and z in the range of 3 to 75, or
x in the range of 3 to 30, y in the range of 2 to 20, and z in the range of 5 to 50, or
x in the range of 5 to 25, y in the range of 2 to 15, and z in the range of 7 to 30, or
x in the range of 5 to 25, y in the range of 3 to 15, and z in the range of 7 to 30.
In different embodiments, the polymer may have:
x in the range of 0 to 50, y in the range of 1 to 50, and the sum of z+u in the range of 1 to 100; or
x in the range of 0 to 40, y in the range of 2 to 35, and the sum of z+u in the range of 3 to 75, or
x in the range of 3 to 30, y in the range of 2 to 20, and the sum of z+u in the range of 5 to 50, or
x in the range of 5 to 25, y in the range of 2 to 15, and the sum of z+u in the range of 7 to 30, or
x in the range of 5 to 25, y in the range of 3 to 15, and the sum of z+u in the range of 7 to 30.

In one embodiment, the invention provides for a polymer comprising at least 2 to 200, or 5 to 150, or 10 to 100, or 15 to 50 repeat units, wherein the repeat units have structures (a), (b), (c) and (d) comprising:
(a) a repeat unit represented by: 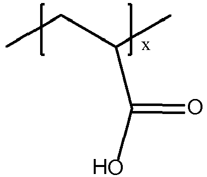
(b) a repeat unit represented by: 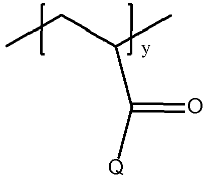
(c) a repeat unit represented by: 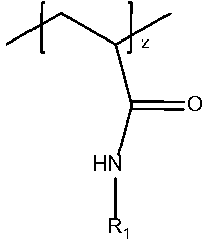
(d) a repeat unit represented by: 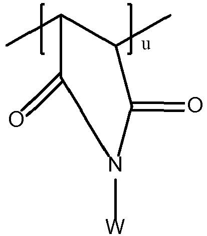 or 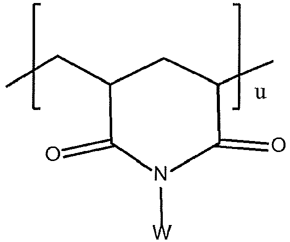 wherein
   E₁ and its pendant carboxylic or carbonyl group may be a repeat unit derived from polymerizing a mono-vinyl monomer with one or more carboxylic acid groups separated by 2 to 5, or 2 to 3 carbon atoms (typically, the carbon atoms are bonded to form an alkylene chain);
   E₂ and its pendant carbonyl groups may be a repeat unit derived from polymerizing one or two mono-vinyl monomer repeat units having one or more carboxylic acid groups, wherein the carboxylic acid groups are separated by 2 to 5, or 2 to 3 carbon atoms (typically, the carbon atoms are bonded to form an alkylene chain);u is greater than 0 and may be up to 150, or 110, or 70, or 45;
   x may be 0 to 50, or 0 to 40, or 3 to 30, or 5 to 25;
   y may be 1 to 50, or 2 to 35, or 2 to 20, or 2 to 15, or 3 to 15;
   z may be 1 to 100, or 3 to 75, or 5 to 50, or 7 to 30;
   Q may be either 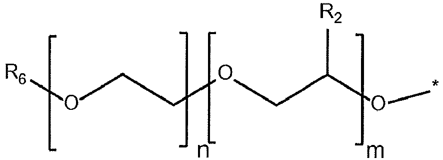
   or 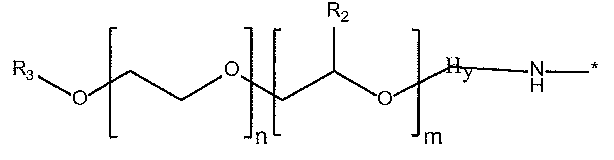
   Hy may be a linear or branched hydrocarbylene group containing 1 to 10, or 1 to 5, or 1 to 3, or 2 to 3 carbon atoms;
   each R₁ may be a hydrocarbyl group, typically, a C₁₋₁₀₀, C₁₋₃₀, or C₆₋₂₄, or C₇₋₁₈ hydrocarbyl group (typically an alkyl or alkaryl, or aryl group);
   each R₂ may be -CH₃, -CH₂CH₃, or an aromatic group (typically a phenyl group, a naphthyl group), or a substituted aromatic group;
   each R₃ may be a hydrocarbyl group, typically, a C₁₋₃₀, or C₆₋₂₄, or C₈₋₁₈ hydrocarbyl group (typically an alkyl or alkaryl, or aryl group);
   each R₆ may be R₃ or an optionally substituted (meth)acrylic group (typically, each R₆ may be R₃ or a hydroxyalkyl (meth)acrylate);
   W may be either R₁- or 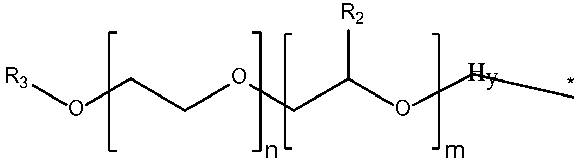
   and
   the sum of n + m may be 5 to 80, or 7 to 77, or 8 to 75, or 10 to 70, typically, n may be an integer that may be larger than m (n may be 11 to 70, and m may be 0 to 34).

Each Q or W may independently have a random or block structure.

The polymer of the invention may have a mixture of repeat units comprising amide, imide, and unreacted carboxylic acid groups.

The polymer of the invention may have a mixture of repeat units comprising ester, amide, imide, and unreacted carboxylic acid groups. Ester groups are formed when polyoxyalkylene alcohols are reacted.

In one embodiment, the polymer of the invention has [ ]_{z} repeat units present in a greater amount than [ ]_{y} repeat units. In some instance the polymer of the invention may have at least twice as many [ ]_{z} repeat units compared to the [ ]_{y} repeat units. For example, the polymer of the invention may have the sum of x+y+z equal to 30, with 8 [ ]_{z} repeat units, and 4 [ ]_{y} repeat units. The polymer may be random or blocky.

In one embodiment, the polymer of the invention has [ ]ᵤ repeat units present in an equal or greater amount than [ ]_{z} repeat units. For example, a mole ratio of [ ]ᵤ to [ ]_{z} of 1:1 to 9:1, or 1.1:1 to 9:1, or 1.5:1 to 8:1. u is greater than 0 and in one embodiment u is greater than z.

The polymer may be terminated by a polymerisation terminating group such as hydrogen or alkyl, typically hydrogen.

In one embodiment, the invention provides a composition comprising a particulate solid (typically a pigment or filler), a liquid medium and a polymer disclosed herein. Typically, the liquid medium may be a polar organic liquid.

In one embodiment, the invention provides a paint or ink comprising a particulate solid, a polar liquid, a film-forming resin and a polymer disclosed herein.

In one embodiment, the invention provides ink jet printing ink comprising a pigment, a polar liquid and a polymer disclosed herein.

In one embodiment, the invention provides a cartridge containing an ink jet printing ink, wherein the ink jet printing ink comprises a pigment, a polar liquid and a polymer disclosed herein.

In one embodiment, the invention provides for the use of and a polymer disclosed herein as a dispersant. In one embodiment, the invention provides for the use of and a polymer disclosed herein as a dispersant in the compositions disclosed herein.

### DETAILED DESCRIPTION OF THE INVENTION

The present invention provides a composition as disclosed herein above.

The Q group may be a residue of a polyoxyalkylene primary amine (typically polyetheramine). The polyoxyalkylene primary amine may be commercially available as the Surfonamine^{®} amines of from Huntsman Corporation. Specific examples of Surfonamine^{®} amines are L-100 (propylene oxide to ethylene oxide mole ratio of 3:19), and L-207 (propylene oxide to ethylene oxide mole ratio of 10:32), L200 (propylene oxide to ethylene oxide mole ratio of 3:41), L-300 (propylene oxide to ethylene oxide mole ratio of 8:58). The figures in parentheses are approximate repeat units of propylene oxide, and ethylene oxide respectively.

R₁-NH- may be derivable from a primary amine of formula R¹-NH₂ via the reaction with a carboxylic group to form an amide linkage. The primary amine may contain 1 to 5, or 1 to 3, or 1 to 2, -NH₂ groups. In order to reduce crosslinking, typically, the primary amine may contain one -NH₂ group.

R₁ may be a linear or branched hydrocarbyl group, typically, an alkyl or alkaryl, or aryl group. R₁-NH- may be derived from a primary linear or branched (typically a linear) amine having C₁₋₃₀, or C₆₋₂₄, or C₇₋₁₈ carbon atoms.

The primary amine may include methylamine, ethylamine, propylamine, butylamine, pentylamine, hexylamine, heptylamine, octylamine, 2-ethylhexylamine, nonylamine, decylamine, undecylamine, dodecylamine, tridecylamine, tetradecylamine, pentadecylamine, hexadecylamine, heptadecylamine, octadecylamine, nonadecylamine, eicosylamine, or mixtures thereof.

When R₁-NH- may be derived from a primary amine of formula R₁-NH₂, wherein the amine has an alkaryl group, the amine may include an alkyl group having 1 to 10, or 1 to 6, or 1 to 4 or 1 to 2 carbon atoms. The amine may include benzyl amine, 2-phenylethanamine (often referred to as phenylethylamine), 3-phenylpropanamine, 4-phenylbutanamine, or mixtures thereof. In one embodiment, the primary amine of formula R₁-NH₂, may include benzyl amine or 2-phenylethanamine. In one embodiment, the primary amine of formula R¹-NH₂, may include 2-phenylethanamine.

R₁-NH- may be derived from a primary amine of formula R₁-NH₂, wherein the amine has one or more aryl groups. The aryl group(s) may be substituted or unsubstituted. If the aryl group is substituted a substituent group may be a hydrocarbyl group, a bridging group (such as an ester, amide or imide) to another hydrocarbyl group that may be linear or aromatic.

R₁-NH- may be derived from a primary amine prepared by reacting an anthranilic anhydride with an amine containing 1 or more primary amino groups (typically one primary amino group).

The anthranilic anhydride may be a substituted or unsubstituted anthranilic anhydride. The anthranilic anhydride may include isatoic anhydride, 8-methyl isatoic anhydride, 8-ethyl isatoic anhydride, 8-propyl isatoic anhydride, 8-butyl isatoic anhydride, naphthylanthranilic anhydride, or mixtures thereof. In one embodiment, the anthranilic anhydride is isatoic anhydride. A primary amine from anthranilic anhydride may be prepared as is shown in PREP1 to PREP5 below.

Preparative Example 1 (PREP1): A solution of 4-aminodiphenylamine in toluene is charged with isatoic anhydride such that the 4-aminodiphenylamine and isatoic anhydride are in a 1:1 ratio, heated to reflux temperature under a nitrogen atmosphere, and stirred for 6 hours. After cooling the resultant product is isolated via filtration yielding a dark-blue powder. The resultant product may have structure:

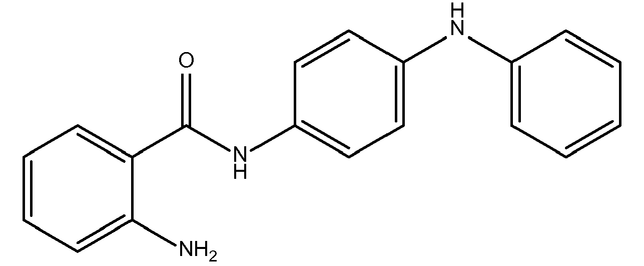

Preparative Example 2 (PREP2): is prepared in a similar manner to PREP1, except aniline is used as the reactive amine. The resultant product may have structure:

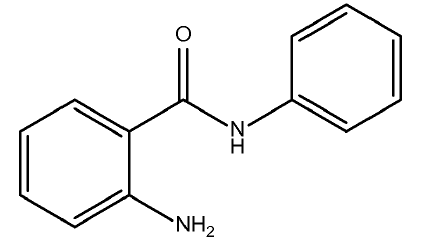

Preparative Example 3 (PREP3): is prepared in a similar manner to PREP2, except N,N-dimethyl-benzene-1,4-diamine is used as the reactive amine. The resultant product may have structure:

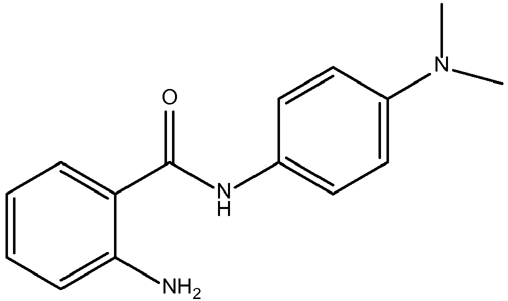

Preparative Example 4 (PREP4): A solution of benzylamine in toluene is charged with isatoic anhydride, such that benzylamine and isatoic anhydride are in a 1:1 ratio, and stirred at room temperature under a nitrogen atmosphere for 2 hours. The product is isolated via filtration yielding an off-white powder. The resultant product may have structure:

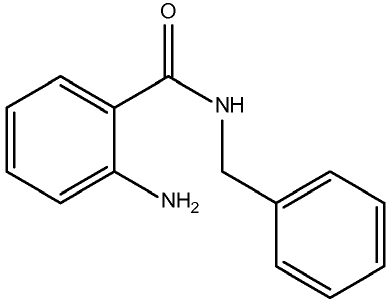

Preparative Example 5 (PREP5): is prepared in a similar manner to PREP4, except that phenethylamine is used as the reactive amine. The resultant product may have structure:

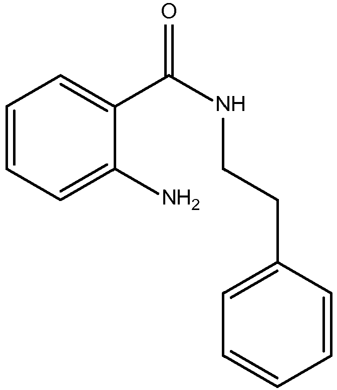

In one embodiment, the primary amine may be a product of PREP1 to PREP5. For example, the primary amine may be a product of PREP1, PREP4 or PREP5 (typically PREP5).

The primary amine may also include aniline, nitroaniline, or aminocarbazole.

The primary amine may be an amine capable of crosslinking i.e., having two or more primary -NH₂ groups, or a compound having a primary amino group at at least one double bond capable of polymerising. If a cross-linking compound may be used to derive R₁, the mole percent may be 0 to 5, or 0 to 2, or 0.

The primary amine, having a primary amino group, may have at least one double bond capable of polymerising. A primary amine of this type includes acrylamide or methacrylamide.

Examples of a crosslinking primary may include 4-aminodiphenylamine (ADPA), and coupling products of ADPA, or hexamethlylene diamine. In one embodiment, the amine may be 4-aminodiphenylamine (ADPA), or coupling products of ADPA. In one embodiment, the amine may be coupling products of ADPA.

Coupled products of ADPA may be represented by the formula: 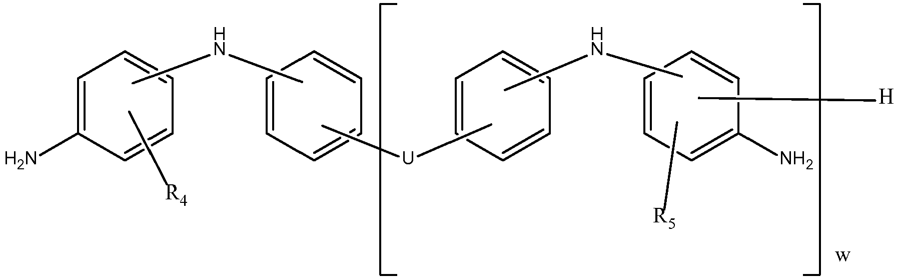 wherein independently each variable,
R₄ may be hydrogen or a C₁₋₅ alkyl group (typically hydrogen);
R₅ may be hydrogen or a C₁₋₅ alkyl group (typically hydrogen);
U may be an aliphatic, alicyclic or aromatic group, with the proviso that when U may be aliphatic, the aliphatic group may be linear or branched alkylene group containing 1 to 5, or 1 to 2 carbon atoms; and
w may be 1 to 10, or 1 to 4, or 1 to 2 (typically 1).

The coupled product may for instance have formula: 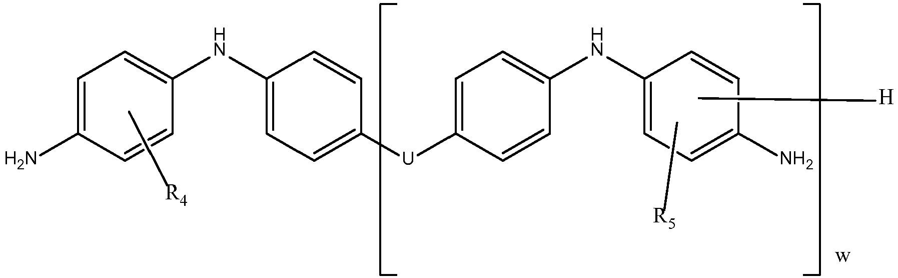 wherein variables U, R₄, R₅, and w are defined above.

Examples of the coupled ADPA include bis[p-(p-aminoanilino)phenyl]-methane, 2-(7-amino-acridin-2-ylmethyl)-N-4-{4-[4-(4-amino-phenylamino)-benzyl]-phenyl}-benzene-1,4-diamine, N-{4-[4-(4-amino-phenylamino)-benzyl]-phenyl}-2-[4-(4-amino-phenylamino)-cyclohexa-1,5-dienylmethyl]-benzene-1,4-diamine, N-[4-(7-amino-acridin-2-ylmethyl)-phenyl]-benzene-1,4-diamine, or mixtures thereof.

The coupled ADPA may be prepared by a process comprising reacting the aromatic amine with an aldehyde. The aldehyde may be aliphatic, alicyclic or aromatic. The aliphatic aldehyde may be linear or branched. Examples of a suitable aromatic aldehyde include benzaldehyde or o-vanillin. Examples of an aliphatic aldehyde include formaldehyde (or a reactive equivalent thereof, such as formalin or paraformaldehyde), ethanal or propanal. Typically, the aldehyde may be formaldehyde or benzaldehyde.

A more detailed description of coupled ADPA compounds may be provided in [0019] to [0027] of US Patent Application number 61/346556, filed 20 May 2010.

The group within [ ]_{m m}ay be derived from an oxyalkylene such as propylene oxide, or phenylene oxide, or mixtures thereof.

The group within [ ]ₙ may be derived from an oxyalkylene such as ethylene oxide.

R₃ may be derivable from a polymerisation initiator such as an alcohol. The alcohol may include methanol, ethanol, propanol, butanol, pentanol, hexanol, heptanol, octanol, 2-ethylhexanol, nonanol, decanol, dodecanol, tridecanol, butadecanol, pentadecanol, hexadecanol, heptadecanol, octadecanol, nonadecanol, eicosanol, pentaerythritol, mannitol, sorbitol, glycerol, di-glycerol, tri-glycerol, tetra-glycerol, erythritol, 2-hydroxymethyl-2-methyl-1,3-propanediol (trimethylolethane), 1,2,4-hexanetriol, 2-ethyl-2-(hydroxymethyl)-1,3-propanediol (trimethylolpropane), or mixtures thereof.

When alcohol mixtures are employed to form R₃ group, the alcohol may, for instance, be Oxo Alcohol® 7911, Oxo Alcohol® 7900 and Oxo Alcohol® 1100 of Monsanto; Alphanol® 79 of ICI; Nafol® 1620, Alfol® 610 and Alfol® 810 of Condea (now Sasol); Epal® 610 and Epal® 810 of Ethyl Corporation; Linevol® 79, Linevol® 911 and Dobanol® 25 L of Shell AG; Lial® 125 of Condea Augusta, Milan; Dehydad® and Lorol® of Henkel KGaA (now Cognis) as well as Linopol® 7-11 and Acropol® 91 of Ugine Kuhlmann.

The process to prepare the polymer of the invention may have a reaction temperature in the range of -80°C to 250°C, or 20 to 220°C, 40°C to 220°C, or 60°C to 200°C.

The process may or may not employ a catalyst. Examples of a suitable catalyst include zirconium butoxide, Phosphoric acid, or tin Octanoate.

The process to prepare the polymer of the invention may employ a number of known polymerisation techniques. The polymerisation techniques include free radical and controlled-free radical techniques. Controlled free radical techniques include RAFT (Reversible Addition Fragmentation Transfer) or ATRP (Atom Transfer Radical Polymerisation). The poylmerisation process may also include anionic polymerisation. More detailed descriptions of polymerisation mechanisms and related chemistry is discussed for ATRP (Chapter 11, pages 523 to 628) and RAFT (Chapter 12, pages 629 to 690) in the Handbook of Radical Polymerization, edited by Krzysztof Matyjaszewski and Thomas P. Davis, 2002, published by John Wiley and Sons Inc. (hereinafter referred to as "Matyjaszewski et al."). A detailed description of anionic polymerisation process is given in Textbook of Polymer Science, edited by Fred W. Billmeyer Jr., Third Edition, 1984, Chapter 4, pages 88-90.

The process may be carried out in an inert atmosphere or air. If an inert atmosphere may be used, the atmosphere may be nitrogen or argon.

The reaction may optionally be carried out in the presence of a solvent. Typically, no solvent may be necessary.

The solvent may include water or liquid medium disclosed herein. The solvent may include water, but water is typically removed during the process to allow amidation or esterification reactions to drive towards completion.

### Industrial Application

In one embodiment, the polymer disclosed herein may be a dispersant, typically, a particulate solid dispersant.

The particulate solids present in the composition may be an organic solid material which may be substantially insoluble in the liquid medium. The liquid medium is typically a polar liquid and typically, includes hydroxy functional solvents such as alcohols and glycols. In one embodiment, the liquid medium is water.

In one embodiment, the composition of the invention provides a paint or ink including a particulate solid, liquid medium, a binder and a polymer disclosed herein.

In one embodiment, the solid may be an organic pigment from any of the recognised classes of pigments described, for example, in the Third Edition of the Colour Index (1971) and subsequent revisions of, and supplements thereto, under the chapter headed "Pigments". In one embodiment, the solid is an organic pigment from any of the recognised classes of pigments described, for example, in the Third Edition of the Colour Index (1971) and subsequent revisions of, and supplements thereto, under the chapter headed "Pigments". Examples of organic pigments are those from the azo, disazo, trisazo, condensed azo, azo lakes, naphthol pigments, anthanthrone, anthrapyrimidine, anthraquinone, benzimidazolone, carbazole, diketopyrrolopyrrole, flavanthrone, indigoid pigments, indanthrone, isodibenzanthrone, isoindanthrone, isoindolinone, isoindoline, isoviolanthrone, metal complex pigments, oxazine, perylene, perinone, pyranthrone, pyrazoloquinazolone, quinacridone, quinophthalone, thioindigo, triarylcarbonium pigments, triphendioxazine, xanthene and phthalocyanine series, especially copper phthalocyanine and its nuclear halogenated derivatives, and also lakes of acid, basic and mordant dyes. Carbon black, although strictly inorganic, behaves more like an organic pigment in its dispersing properties. In one embodiment, the organic pigments are phthalocyanines, especially copper phthalocyanines, monoazos, disazos, indanthrones, anthranthrones, quinacridones, diketopyrrolopyrroles, perylenes and carbon blacks.

Examples of inorganic pigments include metallic oxides, such as titanium dioxide, rutile titanium dioxide and surface coated titanium dioxide, titanium oxides of different colours such as yellow and black, iron oxides of different colours, such as yellow, red, brown and black, zinc oxide, zirconium oxides, aluminium oxide, oxymetallic compounds such as bismuth vanadate, cobalt aluminate, cobalt stannate, cobalt zincate, zinc chromate and mixed metal oxides of two or more of manganese, nickel, titanium, chromium, antimony, magnesium, cobalt, iron or aluminium, Prussian blue, vermillion, ultramarine, zinc phosphate, zinc sulphide, molybdates and chromates of calcium and zinc, metal effect pigments, such as aluminium flake, copper, and copper/zinc alloy, pearlescent flake, such as lead carbonate and bismuth oxychloride.

Examples of suitable solids are pigments for solvent inks; pigments, extenders and fillers for paints and plastics materials; disperse dyes; optical brightening agents and textile auxiliaries for solvent dyebaths, inks and other solvent application systems; solids for oil-based and inverse-emulsion drilling muds; dirt and solid particles in dry cleaning fluids, biocides, agrochemicals and pharmaceuticals which are applied as dispersions in organic solids; particulate ceramic materials; magnetic materials and magnetic recording media; fibres, such as glass, steel, carbon and boron for composite materials.

Inorganic solids include: extenders and fillers, such as talc, kaolin, silica, barytes and chalk, flame-retardant fillers such as alumina trihydrate, or magnesium hydroxide; particulate ceramic materials, such as alumina, silica, zirconia, titania, silicon nitride, boron nitride, silicon carbide, boron carbide, mixed silicon-aluminium nitrides and metal titanates; particulate magnetic materials, such as the magnetic oxides of transition metals, especially iron and chromium, e.g., gamma-Fe₂O_{3,} Fe₃O₄, and cobalt-doped iron oxides, calcium oxide, ferrites, especially barium ferrites; and metal particles, especially metallic iron, nickel, cobalt, copper and alloys thereof.

By the term "polar", in relation to the polar liquid, is meant an organic liquid or medium capable of forming moderate to strong bonds as described in the article entitled, "A Three Dimensional Approach to Solubility", by Crowley et al., in Journal of Paint Technology, Vol. 38, 1966, at page 269. Such organic media, generally, have a hydrogen bonding number of 5 or more as defined in the abovementioned article.

Examples of suitable polar organic liquids are amines, ethers, especially lower alkyl ethers, organic acids, esters, ketones, glycols, alcohols and amides. Numerous specific examples of such moderately and strongly hydrogen bonding liquids are given in the book entitled, "Compatibility and Solubility", by Ibert Mellan, (published in 1968 by Noyes Development Corporation) in Table 2.14 on pages 39-40 and these liquids all fall within the scope of the term polar organic liquid as used herein. Typically, the polar liquid is of the strongly H-bonding type.

Polar organic liquids include mono and poly hydroxy alcohols. The organic liquid may contain up to 6 carbon atoms. Examples of the polar organic liquid liquids include alkanols, such as methanol, ethanol, n-propanol, isopropanol, n-butanol, isobutanol and ethylene glycol. In one embodiment, the polar liquid is water which may contain up to 50% by weight of a water-soluble polar organic liquid or up to 20% of a water-soluble polar organic liquid.

Thus, according to one embodiment of the invention, there is provided a mill-base comprising a particulate solid, dispersant and a water compatible film-forming binder resin. The water compatible resin may be any water-soluble or water insoluble polymer which is used in the water-borne coating industry. Examples of polymers which are commonly used as the principal film-forming binder resin in latex or water-reducible coatings are acrylic, vinyl ester, polyurethane, polyester, epoxy and alkyd.

The dispersion or millbase may also contain a variety of other ingredients which are conventionally incorporated, such as antifoam agents and preservatives.

The organic liquid may be a polyol, that may be to say, an organic liquid with two or more hydroxy groups. In one embodiment, polyols include alpha-omega diols or alpha-omega diol oxyalkylene.

If desired, the compositions may contain other ingredients, for example, resins (where these do not already constitute the organic medium), binders, fluidising agents, anti-sedimentation agents, plasticisers, surfactants, anti-foamers, rheology modifiers, levelling agents, gloss modifiers and preservatives.

The compositions typically contain from 1 to 95% by weight of the particulate solid, the precise quantity depending on the nature of the solid and the quantity depending on the nature of the solid and the relative densities of the solid and the polar organic liquid. For example, a composition in which the solid may be an organic material, such as an organic pigment, in one embodiment, contains from 15 to 60% by weight of the solid whereas a composition in which the solid may be an inorganic material, such as an inorganic pigment, filler or extender, in one embodiment contains from 40 to 90% by weight of the solid based on the total weight of composition.

The composition may be prepared by any of the conventional methods known for preparing dispersions. Thus, the solid, the liquid medium and the dispersant may be mixed in any order, the mixture then being subjected to a mechanical treatment to reduce the particles of the solid to an appropriate size, for example, by ball milling, bead milling, gravel milling or plastic milling until the dispersion may be formed. Alternatively, the solid may be treated to reduce its particle size independently or in admixture with either, the liquid medium or the dispersant, the other ingredient or ingredients then being added and the mixture being agitated to provide the composition.

In one embodiment, the composition of the present invention may be suited to liquid dispersions. The dispersion may be a nano-dispersion (typically, with a mean particle size of 100 nm or less), or a micro-dispersion (typically, with a mean particle size of greater than 100 nm to 3 microns). In one embodiment, such dispersion compositions comprise: (a) 0.5 to 40 parts of a particulate solid, (b) 0.5 to 30 parts of a polymer disclosed herein, and (c) 30 to 99 parts of a liquid medium; wherein all parts are by weight and the amounts (a) +(b) +(c) = 100.

In one embodiment, component a) includes 0.5 to 40 parts of a pigment and such dispersions are useful as liquid inks, paints and mill-bases. In one embodiment, component a) includes 0.5 to 40 parts of a pigment and such dispersions are useful as liquid inks.

If a composition may be required including a particulate solid and a polymer disclosed herein in dry form, the organic liquid may be typically volatile so that it may be readily removed from the particulate solid by a simple separation means such as evaporation. In one embodiment, the composition includes the organic liquid.

Typically, the mill-base contains from 10 to 80% by weight particulate solid based on the total weight of the mill-base.

Where the particulate solid is an organic pigment or a standard carbon black pigment having a surface area below 200 m²/g, the dispersion may conveniently contain from 20% to 50% by weight of pigment but, where the pigment is inorganic, the dispersion may conveniently contain from 30% to 80% by weight of pigment on the same basis. The dispersion typically contains at least 1% up to 100%, both by weight with respect to the weight of pigment, of the dispersant. Where the pigment is an organic pigment or carbon black, the dispersion more typically contains from 5% to 50% and where the pigment is an inorganic pigment, the dispersion typically contains from 1% to 10%, both by weight with respect to the weight of pigment in the dispersion. However, for high to very high surface area carbon black (having a surface area >200 m²/g), the dispersion may contain as low as 3%, or from 5% to 30%, pigment on the same basis and the amount of dispersant is typically from 50% to 100% by weight based on the weight of the pigment.

As already disclosed, such a mill-base or dispersion is useful for the preparation of water-borne paints and inks by admixture with further amounts of water-compatible resin(s) and/or water and other ingredients which are conventionally incorporated into water-borne paints and inks, such as preservatives, stabilisers, antifoaming agents, water miscible cosolvents and coalescing agents. Water-borne paints and inks comprising a mill-base or dispersion according to the present invention are a further feature of the present invention.

The dispersants, according to the invention, may also be used to coat particulate solids such as pigments. Thus, according to a still further aspect of the invention, there is provided a composition comprising a particulate solid and a polymer of the present invention as dispersant. Such coated particulate solids may be prepared from the dispersions, disclosed hereinbefore, by removing the polar liquid.

The dispersions and millbases, according to the invention, are obtainable by any method known to the art and typically comprise milling the particulate solid, polar liquid and polymer of the present invention in the presence of attrition aids until the desired particle size of the particulate solid is achieved. Typically, the mean particle size is less than 30 µm, or less than 20 µm, or less than 10µm.

The polymer of the present inventions, according to the invention, exhibit advantages when used as dispersants compared with dispersants of the prior art. Such advantages include high pigment loadings, lower viscosity of paints, inks and mill-bases, superior gloss, improved colour strength obtained from coloured pigments and "jetness" of black pigments, typically carbon black pigments. These advantages may be obtained without any deleterious effect on other final coating properties such as water resistance.

The dispersion containing pigment, liquid medium (typically, a polar liquid medium) and polymer of the present invention may be used in non-contact printing such as drop-on-demand or continuous printers which may be of the thermal or piezoelectric type of printer. The dispersant may be used in any ink jet printing ink and includes yellow, magenta, cyan and black disperse dyes or pigments. The polar liquid in the non-contact printing ink, typically, is water but may contain up to 60% by weight of a water-soluble co-solvent. Examples of such co-solvents are diethylene glycol, glycerol, 2-pyrrolidone, N-methylpyrrolidone, cyclohexanol, caprolactone, caprolactam, pentane-1,5-diol, 2-(butoxyethoxy) ethanol and thiodiglycol, including mixtures thereof.

The ink used in non-contact printing is, typically, made available in a replaceable cartridge which contains separate reservoirs as containers for the different coloured inks. Thus, according to a further aspect of the invention, there is provided a cartridge containing one or more of a dispersant dyes and/or pigments, a polar liquid and a polymer of the present invention as disclosed hereinbefore.

Dispersions and mill-bases made from the composition of the invention are suitable for use in coatings and paints both solvent-based and water-base, especially high solids paints; inks, especially offset, flexographic, gravure, radiation-curable, and screen inks; non-aqueous ceramic processes, especially tape-coating, doctor-blade, extrusion and injection moulding type processes, composites, cosmetics, adhesives and plastics materials. In one embodiment, the dispersions and mill-bases may be made from the composition of the invention for inks, especially inkjet (including water based UV inkjet inks), offset, flexographic, gravure, radiation-curable, and screen inks. In one embodiment, the dispersions and mill-bases made from the composition of the invention are suitable for use in aqueous printing applications such as inks for ink jet printers.

In one embodiment, the composition of the invention further includes one or more additional known dispersants.

The following examples provide illustrations of the invention. These examples are non exhaustive and are not intended to limit the scope of the invention. All chemicals were purchased from Aldrich except where stated. The polymer may be characterised by size exclusion chromatography relative to polystyrene standards.

### EXAMPLES

Comparative Example 1 (CE1): a round bottom flask is charged poly(acrylic acid) solution 50% in water (86.7 parts, Carbosperse K732 ex Lubrizol) and polyether amine (137.47 parts, Surfonamine™ L207 ex Huntsman). The reaction mixture is held at 150°C for 16 hours. Water is removed by distillation. The resulting product is re-dissolved in water to give a product with 50% actives.

Example 1 (EX1): a round bottom flask is charged poly(acrylic acid) solution 50% in water (86.7 parts, Carbosperse K732 ex Lubrizol) and polyether amine (137.47 parts, Surfonamine™ L207 ex Huntsman). The reaction mixture is held at 150°C for 16 hours. Water is removed by distillation. 60 parts of the product is reacted with benzyl amine (4.82 parts). The reaction mixture is held at 170°C for a further 16 hours. Spectroscopic analysis demonstrated the formation of amide and imide groups. The product is then re-dissolved in water (64.82 parts). The resulting product had a solids content of 50%.

Example 2 (EX2): a round bottom flask is charged poly(acrylic acid) (2.5 parts, Average Mw=1800 ex Aldrich) polyether amine (11.1 parts, Surfonamine™ L207 ex Huntsman) and phenyl ethyl amine (1.85 parts). The reaction mixture is held at 170°C for 1 hour then water is removed by distillation over 2 hours. The reaction mixture is then left for 16 hours at 170°C. Spectroscopic analysis demonstrated the formation of amide and imide groups. The resulting product had a solids content of 50%.

Example 3 (EX3): a round bottom flask is charged poly(acrylic acid) solution 50% in water (20 parts, Carbosperse® K732 ex Lubrizol) and polyether amine (31.71 parts, Surfonamine™ L200 ex Huntsman). The reaction mixture is held under reflux at 150°C for 5 hours to remove water then octyl amine (4.35 parts) is charged. The reaction mixture is held under reflux at 170°C for 20 hours. Spectroscopic analysis demonstrated the formation of amide and imide groups. The product is then re-dissolved in water (56.06 parts). The resulting product had a solids content of 50%.

Example 4 (EX4): a round bottom flask is charged poly(acrylic acid) solution 50% in water (20 parts, Carbosperse® K732 ex Lubrizol) and polyether amine (31.71 parts, Surfonamine™ L207 ex Huntsman). The reaction mixture is held at 120°C for 30 minutes under reflux. Phenyl ethyl amine is then added (7.25 parts) and water removed by distillation over 16 hours at 180°C. Spectroscopic analysis demonstrated the formation of amide and imide groups. The resulting product is 100% active.

Example 5 (EX5): a round bottom flask is charged poly(acrylic acid) solution 50% in water (9.8 parts, Carbosperse® K732 ex Lubrizol), polyether amine (15.51 parts, Surfonamine™ L207 ex Huntsman) and 2-amino-N-(4-phenylaminophenyl)-benzamide (5 parts). The reaction mixture is heated at 60°C for 1 hour then water is removed by distillation at 120°C for 4 hours. The reaction mixture is heated at 180°C for 16 hours. Spectroscopic analysis demonstrated the formation of amide and imide groups. The resulting product is 100% active.

Example 6 (EX6): a round bottom flask is charged poly(acrylic acid) solution 50% in water (80.12 parts, Carbosperse® K732 ex Lubrizol), polyether amine (39.61 parts, Surfonamine™ L100 ex Huntsman) and phenyl ethyl amine (19.29 parts). The reaction mixture is heated to 180°C for 4 hours and water is removed by distillation. The reaction mixture is heated at 180°C for 16 hours. Spectroscopic analysis demonstrated the formation of amide and imide groups. The resulting product is 100% active.

Example 7 (EX7) : a round bottom flask is charged poly(acrylic acid) solution 50% in water (20 parts, Carbosperse® K732 ex Lubrizol) and polyether amine (37.00 parts, Surfonamine™ L207 ex Huntsman). The water is removed by distillation over 2 hours at 120°C . Phenyl ethyl amine is then added (4.48 parts) and the reaction mixture is heated at 120°C for 23 hours. Spectroscopic analysis demonstrated the formation of amide and imide groups with a higher proportion of amide groups. The resulting product is 100% active.

Example 8 (EX8): a round bottom flask is charged poly(acrylic acid) solution 50% in water (20 parts, Carbosperse® K732 ex Lubrizol) and polyether amine (37.00 parts, Surfonamine™ L207 ex Huntsman). The water is removed by distillation over 2 hours at 120°C. Phenyl ethyl amine is then added (4.48 parts) and the temperature increased to 210°C for 23 hours. Spectroscopic analysis demonstrated the formation of amide and imide groups with a higher proportion of imide groups. The resulting product is 100% active.

Example 9 (EX9) : a round bottom flask is charged poly(acrylic acid) solution 50% in water (20 parts, Carbosperse® K732 ex Lubrizol) and polyether amine (37 parts, Surfonamine™ L207 ex Huntsman). The water is removed by distillation over 4 hours at 150°C. Phenyl ethyl amine is then added (6.72 parts) and the temperature increased to 170°C for 23 hours. Spectroscopic analysis demonstrated the formation of amide and imide groups. The resulting product is diluted with water (71.2parts) to 43% active.

Dispersion Evaluation Composition 1: Mill bases are prepared by dissolving CE1 and Examples 1-3 (1.8 parts, 50% active) in water (7.7 parts). 3mm Diameter glass beads (17 parts) and Pigment red 122 (1.5 parts, Inkjet Magenta™ EO2 ex Clariant) are added and the contents milled on a horizontal shaker for 16 hours. Each mill base exhibited fluidity. The mill bases are then aged at 70°C in an oven for 5 days. The particle size (PS) of the mill bases were then determined on a Nanotrac® NPA251 particle size analyser. The average equivalent diameter D90 has been used to compare the particle size of the dispersions. The dispersions formed are summarised as follows:

| Dispersant in Mill-base | PS Mill base D90 (nm) |
|---|---|
| CE1 | 2200 |
| 1 | 430 |
| 2 | 460 |
| 3 | 380 |

| | |
|---|---|
| Footnote: CE1 is a mill base that does not contain a product of example 1 to example 3. | |

Dispersion Evaluation Composition 2: Mill bases are prepared by dissolving CE2 and Examples 4-6 (0.9 parts, 100% active) in water (7.6 parts). 3mm Diameter glass beads (17 parts) and Pigment violet 19 (1.5 parts, Inkjet Magenta™ E5B02 ex Clariant) are added and the contents milled on a horizontal shaker for 16 hours. The mill bases exhibited fluidity except CE1. The mill bases are then aged at 70°C in an oven for 5 days. The particle size (PS) of the mill bases were then determined on a Nanotrac® NPA251 particle size analyser. The average equivalent diameter D90 has been used to compare the particle size of the dispersions. The dispersions formed are summarised as follows:

| Dispersant in Mill-base | PS Mill base D90 (nm) |
|---|---|
| CE1 | >1000 |
| 4 | 350 |
| 5 | 460 |
| 6 | 730 |

| | |
|---|---|
| Footnote: CE4 is a mill base that does not contain a product of example 4 to example 6. | |

Mill bases from dispersion evaluations 1 and 2 (5 parts) are letdown into a solution of water (16 parts), 2-pyrolidinone (0.5 parts), 1,5 pentane diol (1.25 parts) and glycerol (2.5 parts) and Tego™ Wet (0.125 part ex TEGO). The particle size of the pigment dispersion in the resulting ink solutions are evaluated before and after storage at 70°C for five days. The average equivalent diameter D90 has been used to compare the particle size of the dispersions. The dispersions formed are summarised as follows:

| Dispersant in Mill-base | PS Mill base D90 (nm) |
|---|---|
| CE1 | >2000 |
| 1 | 610 |
| 2 | 600 |
| 3 | 330 |
| CE2 | 2800 |
| 4 | 360 |
| 5 | 650 |
| 6 | 880 |

Dispersion Evaluation Composition 3: Mill bases are prepared by dissolving Examples 7,8,9 (0.9 parts, 100% active) in water (7.6 parts). Antifoam (0.005 parts, Byk ®- 024)is then added. 3mm Diameter glass beads (17 parts) and Pigment Violet 19 (1.5 parts, Inkjet Magenta™ E5B02 ex Clariant), are added and the contents milled on a horizontal shaker for 16 hours. Each mill base exhibited fluidity. The mill bases are then aged at 70°C in an oven for 3 weeks. The particle size (PS) of the mill bases were then determined on a Nanotrac® NPA251 particle size analyser. The average equivalent diameter D50 and D90 has been used to compare the particle size of the dispersions. The dispersions formed are summarised as follows:

| Example | PS Mill base Week 0 | | PS Mill base Week 1 | | PS Mill base Week 2 | | PS Mill base Week 3 | |
|---|---|---|---|---|---|---|---|---|
| | D50 | D90 | D50 | D90 | D50 | D90 | D50 | D90 |
| 7 | 190 | 268 | 238 | 396 | 268 | 451 | 278 | 527 |
| 8 | 156 | 352 | 171 | 368 | 182 | 304 | 183 | 306 |
| 9 | 182 | 314 | 179 | 275 | 186 | 277 | 188 | 314 |

Dispersion Evaluation Composition 4: A dispersions is prepared by dissolving Example 9 (34.88 parts), water (97.05 parts), propylene glycol (7.5 parts), antifoam (0.3 parts DF1396 ex eChem) and Pigment Blue 15:4 (30 parts, Irgalite Blue GVLO ex BASF) are charged to a Dispermat™F1 Pot. Glass beads are then added (190 parts) under agitation and the mixture is milled on a Dispermat™F1 mill for 60 minutes at 1500 rpm. The resulting mill base is filtered to remove beads. To the mill base (115 parts) is added water (36.34 parts) and Propylene glycol (1.92 parts) and Antifoam (0.08 parts DF1396 ex eChem). The resulting dispersion is milled at 4500 rpm for 120 mins at 20°C in a WAB™mill (A Willy A. Bachofen Research lab mill) using 0.1mm Zirconium beads (185 parts) in the milling chamber. The dispersions are left to age at 50°C over a period of three weeks. The particle size is then measured using a Nanotrac™ Particle Size analyser. The particle size (PS) measured for each dispersion is shown below. Typically, better results are obtained for dispersions with lower particle sizes after three weeks. The results obtained are:

| Example | PS Ink solution Week 0 | | PS Ink solution Week 3 | |
|---|---|---|---|---|
| | D50 | D90 | D50 | D90 |
| Ex 9 | 166 | 242 | 167 | 288 |

The data obtained from the tests above indicate that the compositions of the invention have at least one of enhanced mill base viscosity or ink viscosity, and enhanced stability of aqueous dispersions over the compositions containing a comparative example dispersant.

Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. It is to be understood that the upper and lower amount, range, and ratio limits set forth herein may be independently combined. Similarly, the ranges and amounts for each element of the invention may be used together with ranges or amounts for any of the other elements.

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include:
(i) hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form a ring);
(ii) substituted hydrocarbon substituents, that is, substituents containing non-hydrocarbon groups which, in the context of this invention, do not alter the predominantly hydrocarbon nature of the substituent (e.g., halo (especially chloro and fluoro), hydroxy, alkoxy, mercapto, alkylmercapto, nitro, nitroso, and sulfoxy); and
(iii) hetero substituents, that is, substituents which, while having a predominantly hydrocarbon character, in the context of this invention, contain other than carbon in a ring or chain otherwise composed of carbon atoms and encompass substituents as pyridyl, furyl, thienyl and imidazolyl. Heteroatoms include sulfur, oxygen, and nitrogen. In general, no more than two, or no more than one, non-hydrocarbon substituent will be present for every ten carbon atoms in the hydrocarbyl group; typically, there will be no non-hydrocarbon substituents in the hydrocarbyl group.

## Claims

1. A polymer comprising at least 2 to 200, or 5 to 150, or 10 to 100, or 15 to 50 repeat units, wherein the repeat units are selected from the group of structures (a), (b), (c), and (d) comprising:
(a) a repeat unit represented by: 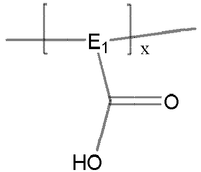
(b) a repeat unit represented by: 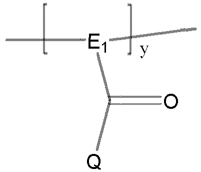
(c) a repeat unit represented by: 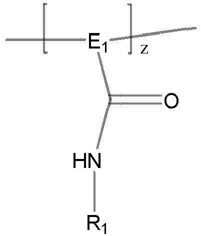 and
(d) a repeat unit represented by: 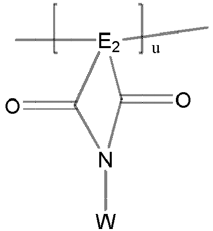 wherein
E₁ is a repeat unit derived from a mono-vinyl monomer with one or more carboxylic acid groups separated by 2 to 5, or 2 to 3 carbon atoms;
E₂ is a repeat unit derived from one or two mono-vinyl monomer repeat units having one or more carboxylic acid groups, wherein the carboxylic acid groups are separated by 2 to 5, or 2 to 3 carbon atoms;
u is greater than 0;
x is 0 to 50, or 0 to 40, or 3 to 30, or 5 to 25;
y is 1 to 50, or 2 to 35, or 2 to 20, or 2 to 15, or 3 to 15;
z is 1 to 100, or 3 to 75, or 5 to 50, or 7 to 30;
Q is either 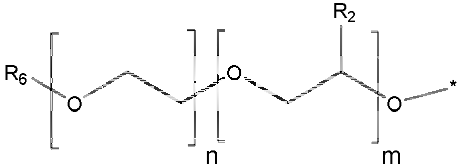
or 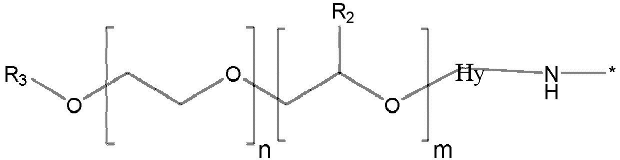
Hy is a linear or branched hydrocarbylene group containing 1 to 10, or 1 to 5, or 1 to 3, or 2 to 3 carbon atoms;
each R₁ is a hydrocarbyl group, typically a C₁₋₁₀₀, C₁₋₃₀, or C₆₋₂₄, or C₇₋₁₈ hydrocarbyl group; each R₂ is -CH₃, -CH₂CH₃, or an aromatic group, or a substituted aromatic group;
each R₃ is a hydrocarbyl group, typically a C₁₋₃₀, or C₆₋₂₄, or C₈₋₁₈ hydrocarbyl group;
each R₆ is R₃ or an optionally substituted (meth)acrylic group;
W is either R₁- or 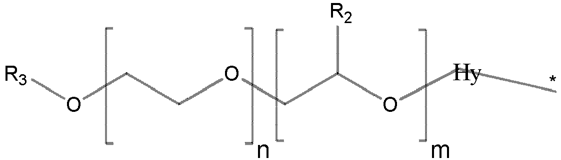
and
the sum of n + m is 5 to 80, or 7 to 77, or 8 to 75, or 10 to 70, typically n is an integer that is larger than m.

2. The polymer of claim 1, wherein x is 0 to 50, y is 1 to 50, and z is 1 to 100 or more preferably x is 0 to 50, y is 1 to 50, and the sum of z+u is 1 to 100.

3. The polymer of claim 1, wherein x is 0 to 40, y is 2 to 35, and z is 3 to 75 or more preferably x is 0 to 40, y is 2 to 35, and the sum of z+u is 3 to 75.

4. The polymer of claim 1, wherein x is 3 to 30, y is 2 to 20, and z is 5 to 50 or more preferably x is 3 to 30, y is 2 to 20, and the sum of z+u is 5 to 50 .

5. The polymer of claim 1, wherein x is 5 to 25, y is 3 to 15, and z is 7 to 30 or more preferably x is 5 to 25, y is 3 to 15, and the sum of z+u is 7 to 30 .

6. The polymer of any preceding claim, wherein the mono-vinyl monomer with one or more carboxylic acid groups is acrylic acid, methacrylic acid, itaconic acid, crotonic acid, maleic acid, tiglic acid, mesaconic acid, citraconic acid, or mixtures thereof.

7. The polymer of any preceding claim, wherein the mono-vinyl monomer with one or more carboxylic acid groups is acrylic acid, methacrylic acid, itaconic acid, or mixtures thereof

8. The polymer of any preceding claim, wherein the mono-vinyl monomer with one or more carboxylic acid groups is acrylic acid.

9. The polymer of any preceding claim, wherein the polymer has a number average molecular weight of 3000 to 70,000, or 3000, to 20,000, or 5000 to 12,000.

10. The polymer of any preceding claim, wherein the polymer has [ ]ᵤ repeat units present in a greater amount than [ ]_{z} repeat units.

11. A composition comprising a particulate solid, a liquid medium and a polymer of any preceding claim 1 to 10.

12. The composition of claim 11, wherein pigment is a quinacridone, or mixtures thereof.

13. The composition of any preceding claim 11 to 12, wherein the polymer is present in a range selected from 0.1 to 50 wt %, or 0.25 to 35 wt %, and 0.5 to 30 wt %.

14. A paint or ink comprising a particulate solid, a polar liquid, a film-forming resin and a polymer of any preceding claim 1 to 11.

15. An ink jet printing ink comprising a pigment, a polar liquid and a polymer of any preceding claim 1 to 11.

16. The use of a polymer of any preceding claim 1 to 11 as a dispersant.

17. The use of claim 16 in an ink or paint.

## Patentansprüche

1. Polymer umfassend mindestens 2 bis 200 oder 5 bis 150 oder 10 bis 100 oder 15 bis 50 Wiederholungseinheiten, wobei die Wiederholungseinheiten aus der Gruppe der Strukturen (a), (b), (c) und (d) ausgewählt sind, umfassend:
(a) eine Wiederholungseinheit dargestellt durch 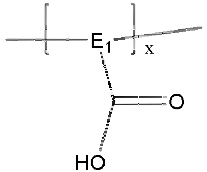
(b) eine Wiederholungseinheit dargestellt durch: 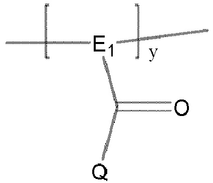
(c) eine Wiederholungseinheit dargestellt durch: 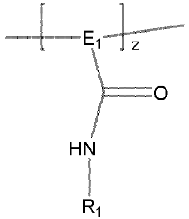 und
(d) eine Wiederholungseinheit dargestellt durch: 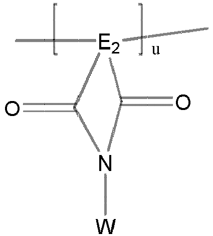 wobei
E₁ eine Wiederholungseinheit ist, die von einem Monovinylmonomer mit einer oder mehreren Carbonsäuregruppen abgeleitet ist, die durch 2 bis 5 oder 2 bis 3 Kohlenstoffatome getrennt sind,
E₂ eine Wiederholungseinheit ist, die von einer oder zwei Monovinylmonomer-Wiederholungseinheiten abgeleitet ist, die eine oder mehrere Carbonsäuregruppen aufweist/aufweisen, wobei die Carbonsäuregruppen durch 2 bis 5 oder 2 bis 3 Kohlenstoffatome getrennt sind,
u mehr als 0 beträgt;
x 0 bis 50 oder 0 bis 40 oder 3 bis 30 oder 5 bis 25 beträgt;
y 1 bis 50 oder 2 bis 35 oder 2 bis 20 oder 2 bis 15 oder 3 bis 15 beträgt;
z 1 bis 100 oder 3 bis 75 oder 5 bis 50 oder 7 bis 30 beträgt;
Q entweder 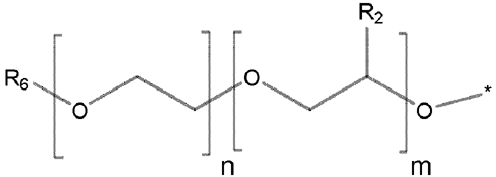
oder 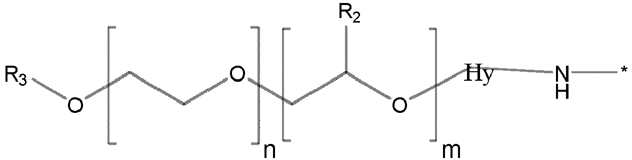 ist,
Hy eine lineare oder verzweigte Hydrocarbylengruppe ist, die 1 bis 10 oder 1 bis 5 oder 1 bis 3 oder 2 bis 3 Kohlenstoffatome enthält;
jedes R₁ eine Hydrocarbylgruppe, typischerweise eine C₁₋₁₀₀-, C₁₋₃₀- oder C₆₋₂₄-oder C₇₋₁₈-Hydrocarbylgruppe ist,
jedes R₂ -CH₃, -CH₂CH₃ oder eine aromatische Gruppe oder eine substituierte aromatische Gruppe ist;
jedes R₃ eine Hydrocarbylgruppe, typischerweise eine C₁₋₃₀- oder C₆₋₂₄- oder C₈₋₁₈-Hydrocarbylgruppe ist;
jedes R₆ R₃ oder eine wahlweise substituierte (Meth)acrylgruppe ist;
W entweder R₁- oder 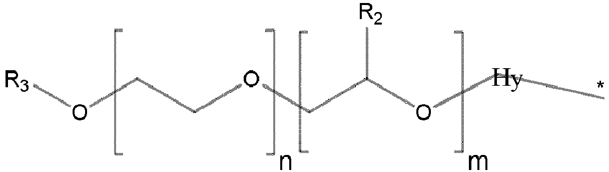
ist und
die Summe von n + m 5 bis 80 oder 7 bis 77 oder 8 bis 75 oder 10 bis 70 beträgt, typischerweise n eine ganze Zahl ist, die höher als m ist.

2. Polymer nach Anspruch 1, wobei x 0 bis 50 beträgt, y 1 bis 50 beträgt und z 1 bis 100 beträgt oder noch bevorzugter x 0 bis 50 beträgt, y 1 bis 50 beträgt und die Summe von z+u 1 bis 100 beträgt.

3. Polymer nach Anspruch 1, wobei x 0 bis 40 beträgt, y 2 bis 35 beträgt und z 3 bis 75 oder mehr beträgt, bevorzugter x 0 bis 40 beträgt, y 2 bis 35 beträgt und die Summe von z+u 3 bis 75 beträgt.

4. Polymer nach Anspruch 1, wobei x 3 bis 30 beträgt, y 2 bis 20 beträgt und z 5 bis 50 oder mehr beträgt, bevorzugter x 30 bis 30 beträgt, y 2 bis 20 beträgt und die Summe von z+u 5 bis 50 beträgt.

5. Polymer nach Anspruch 1, wobei x 5 bis 25 beträgt, y 3 bis 15 beträgt und z 7 bis 30 oder mehr beträgt, bevorzugter x 5 bis 25 beträgt, y 3 bis 15 beträgt und die Summe von z+u 7 bis 30 beträgt.

6. Polymer nach irgendeinem vorhergehenden Anspruch, wobei das Monovinylmonomer mit einer oder mehreren Carbonsäuregruppen Acrylsäure, Methacrylsäure, Itaconsäure, Krotonsäure, Maleinsäure, Tiglinsäure, Mesaconsäure, Citraconsäure oder Mischungen davon ist.

7. Polymer nach irgendeinem vorhergehenden Anspruch, wobei das Monovinylmonomer mit einer oder mehreren Carbonsäuregruppen Acrylsäure, Methacrylsäure, Itaconsäure oder Mischungen davon ist.

8. Polymer nach irgendeinem vorhergehenden Anspruch, wobei das Monovinylmonomer mit einer oder mehreren Carbonsäuregruppen Acrylsäure ist.

9. Polymer nach irgendeinem vorhergehenden Anspruch, wobei das Polymer ein zahlendurchschnittliches Molekulargewicht von 3000 bis 70.000 oder 3000 bis 20.000 oder 5000 bis 12.000 aufweist.

10. Polymer nach irgendeinem vorhergehenden Anspruch, wobei das Polymer [ ]ᵤ Wiederholungseinheiten aufweist, die in einer höheren Menge als [ ]_{z} Wiederholungseinheiten vorliegen.

11. Zusammensetzung umfassend einen teilchenförmigen Feststoff, ein flüssiges Medium und ein Polymer nach irgendeinem vorhergehenden Anspruch 1 bis 10.

12. Zusammensetzung nach Anspruch 11, wobei das Pigment Chinacridon oder Mischungen davon von ist.

13. Zusammensetzung nach irgendeinem vorhergehenden Anspruch 11 bis 12, wobei das Polymer in einer Menge im Bereich ausgewählt unter 0,1 bis 50 Gew.-% oder 0,25 bis 35 Gew.-% und 0,5 bis 30 Gew.-% vorliegt.

14. Anstrichmittel oder Tinte umfassend einen teilchenförmigen Feststoff, eine polare Flüssigkeit, ein filmbildendes Harz und ein Polymer nach irgendeinem vorhergehenden Anspruch 1 bis 11.

15. Tintenstrahldrucktinte umfassend ein Pigment, eine polare Flüssigkeit und ein Polymer nach irgendeinem vorhergehenden Anspruch 1 bis 11.

16. Verwendung eines Polymers nach irgendeinem vorhergehenden Anspruch 1 bis 11 als Dispergierhilfsmittel.

17. Verwendung nach Anspruch 16 in einer Tinte oder einem Anstrichmittel.

## Revendications

1. Polymère comprenant au moins 2 à 200, ou 5 à 150, ou 10 à 100, ou 15 à 50 motifs de répétition, dans lequel les motifs de répétition sont sélectionnés dans le groupe des structures (a), (b), (c), et (d) comprenant:
(a) un motif de répétition représenté par: 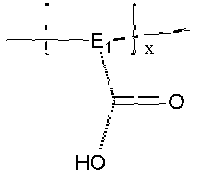
(b) un motif de répétition représenté par: 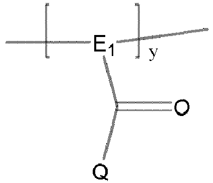
(c) un motif de répétition représenté par: 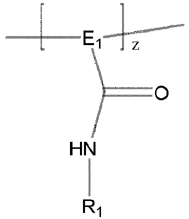 et
(d) un motif de répétition représenté par: 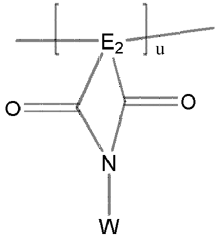 dans lequel
E₁ est un motif de répétition dérivé d'un monomère mono-vinylique avec un ou plusieurs groupes acide carboxylique séparés de 2 à 5, ou 2 à 3 atomes de carbone;
E₂ est un motif de répétition dérivé d'un ou deux motifs de répétition monomère mono-vinylique ayant un ou plusieurs groupes acide carboxylique, dans lequel les groupes acide carboxylique sont séparés de 2 à 5, ou 2 à 3 atomes de carbone;
u est supérieur à 0;
x est 0 à 50, ou 0 à 40, ou 3 à 30, ou 5 à 25;
y est 1 à 50, ou 2 à 35, ou 2 à 20, ou 2 à 15, ou 3 à 15;
z est 1 à 100, ou 3 à 75, ou 5 à 50, ou 7 à 30;
Q est soit 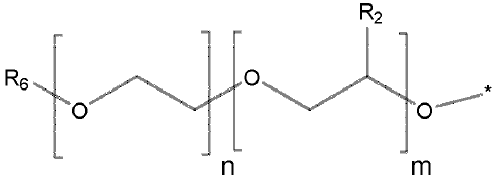
soit 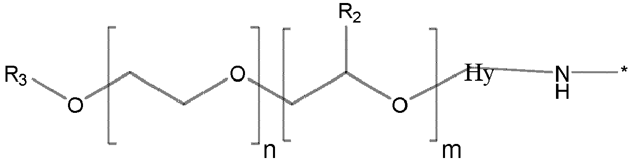
Hy est un groupe hydrocarbylène linéaire ou ramifié contenant 1 à 10, ou 1 à 5, ou 1 à 3, ou 2 à 3 atomes de carbone;
chaque R₁ est un groupe hydrocarbyle, typiquement un groupe hydrocarbyle en C₁ à C₁₀₀, C₁ à C₃₀, ou C₆ à C₂₄, ou C₇ à C₁₈;
chaque R₂ est un groupe -CH₃, -CH₂CH₃, ou un groupe aromatique, ou un groupe aromatique substitué;
chaque R₃ est un groupe hydrocarbyle, typiquement un groupe hydrocarbyle en C₁ à C₃₀, ou C₆ à C₂₄, ou C₈ à C₁₈;
chaque R₆ est R₃ ou un groupe (méth)acrylique éventuellement substitué;
W est soit R₁ soit 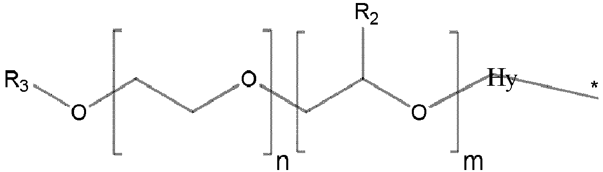
et
la somme de n + m est 5 à 80, ou 7 à 77, ou 8 à 75, ou 10 à 70, typiquement n est un nombre entier qui est supérieur à m.

2. Polymère selon la revendication 1, dans lequel x est 0 à 50, y est 1 à 50, et z est 1 à 100 ou plus préférablement x est 0 à 50, y est 1 à 50, et la somme de z + u est 1 à 100.

3. Polymère selon la revendication 1, dans lequel x est 0 à 40, y est 2 à 35, et z est 3 à 75 ou plus préférablement x est 0 à 40, y est 2 à 35, et la somme de z + u est 3 à 75.

4. Polymère selon la revendication 1, dans lequel x est 3 à 30, y est 2 à 20, et z est 5 à 50 ou plus préférablement x est 3 à 30, y est 2 à 20, et la somme de z + u est 5 à 50.

5. Polymère selon la revendication 1, dans lequel x est 5 à 25, y est 3 à 15, et z est 7 à 30 ou plus préférablement x est 5 à 25, y est 3 à 15, et la somme de z + u est 7 à 30.

6. Polymère selon l'une quelconque des revendications précédentes, dans lequel le monomère mono-vinylique avec un ou plusieurs groupes acide carboxylique est l'acide acrylique, l'acide méthacrylique, l'acide itaconique, l'acide crotonique, l'acide maléique, l'acide tiglique, l'acide mésaconique, l'acide citraconique, ou leurs mélanges.

7. Polymère selon l'une quelconque des revendications précédentes, dans lequel le monomère mono-vinylique avec un ou plusieurs groupes acide carboxylique est l'acide acrylique, l'acide méthacrylique, l'acide itaconique, ou leurs mélanges.

8. Polymère selon l'une quelconque des revendications précédentes, dans lequel le monomère mono-vinylique avec un ou plusieurs groupes acide carboxylique est l'acide acrylique.

9. Polymère selon l'une quelconque des revendications précédentes, dans lequel le polymère a un poids moléculaire moyen en nombre de 3 000 à 70 000, ou de 3 000, à 20 000, ou de 5 000 à 12 000.

10. Polymère selon l'une quelconque des revendications précédentes, dans lequel le polymère a []ᵤ motifs de répétition présents en une quantité supérieure à []_{z} motifs de répétition.

11. Composition comprenant un solide sous forme de particules, un milieu liquide et un polymère selon l'une quelconque des revendications précédentes 1 à 10.

12. Composition selon la revendication 11, dans lequel le pigment est une quinacridone, ou des mélanges de celle-ci.

13. Composition selon l'une quelconque des revendications précédentes 11 à 12, dans laquelle le polymère est présent dans une plage sélectionnée parmi de 0,1 à 50 % en pds, ou de 0,25 à 35 % en pds, et de 0,5 à 30 % en pds.

14. Peinture ou encre comprenant un solide sous forme de particules, un liquide polaire, une résine formant film et un polymère selon l'une quelconque des revendications précédentes 1 à 11.

15. Encre d'impression par jet d'encre comprenant un pigment, un liquide polaire et un polymère selon l'une quelconque des revendications précédentes 1 à 11.

16. Utilisation d'un polymère selon l'une quelconque des revendications précédentes 1 à 11 comme dispersant.

17. Utilisation selon la revendication 16 dans une encre ou une peinture.
